# DEMANDE DE BREVET EUROPEEN

(11) **EP 4 813 779 A1**
(43) Date de publication de la demande: **30.09.2026**
(21) Numéro de dépôt: 26161740.1
(22) Date de dépôt: 02.03.2026
(51) Int. Cl.: B60W 30/12

(54) **PROCÉDÉ DE DÉCALAGE AUTOMATIQUE D'UN VÉHICULE VERS UN CÔTÉ DE SA VOIE DE CIRCULATION**

(30) Priorité: 07.03.2025 FR 2502308
(71) Demandeur: AMPERE s.a.s., 92100 Boulougne-Billancourt (FR)
(72) Inventeur: RONDEL, Jérémie, 78084 GUYANCOURT (FR)
(74) Mandataire: Renault Group

(57) **Abrégé**

Un aspect de l'invention concerne un procédé de décalage automatique d'un véhicule (200) vers un côté (2011) d'une voie (201) sur laquelle circule ledit véhicule (200), comportant une étape de décalage automatique dudit véhicule (200) vers ledit côté (2011)de la voie (201), mise en œuvre par une fonction de contrôle du positionnement du véhicule (200) dans la voie implémentée sur ledit véhicule (200), caractérisé en ce que l'étape de décalage est mise en œuvre si une condition prédéfinie est remplie, la condition prédéfinie étant remplie si un temps nécessaire audit véhicule (200) pour réaliser le décalage est supérieur ou égal à un temps nécessaire audit véhicule (200) pour atteindre une vitesse nulle, et si une distance (Dd) nécessaire audit véhicule (200) pour réaliser le décalage est inférieure à une distance (Dv) entre ledit véhicule (200) et un autre véhicule précédant ledit véhicule (200) dans la voie (201).

## Description

### DOMAINE TECHNIQUE DE L'INVENTION

Le domaine technique de l'invention est celui des fonctions de sécurité dans les véhicules, et plus particulièrement celui des fonctions de contrôle de positionnement des véhicules dans leurs voies.

La présente invention concerne un procédé de décalage d'un véhicule vers un côté de sa voie de circulation et en particulier un procédé de décalage automatique d'un véhicule vers un côté de sa voie de circulation. L'invention concerne également un véhicule et un produit-programme d'ordinateur pour la mise en œuvre du procédé.

### ARRIERE-PLAN TECHNOLOGIQUE DE L'INVENTION

La fonction de contrôle du positionnement d'un véhicule dans sa voie est une prestation permettant au véhicule d'automatiquement se serrer d'un côté de la voie dans laquelle il circule pour dégager un espace en interligne pour que des motos ou des véhicules d'urgence puissent passer. Cette fonction s'active notamment dans les deux cas suivants : un premier cas dans lequel un autre véhicule est détecté en interligne à l'arrière du véhicule et un deuxième cas dans lequel le véhicule se trouve dans une situation particulière, par exemple en présence d'un embouteillage sur une route à au moins deux voies avec une vitesse inférieure à un seuil prédéfini.

Dans le premier cas, il arrive que le décalage ne soit plus réalisable au moment de la détection car le véhicule devant effectuer le décalage est à l'arrêt ou proche de l'arrêt.

Dans le deuxième cas, le décalage est maintenu tant que la situation perdure. Le véhicule est donc constamment serré d'un côté de la voie, ce qui oblige à appliquer des cartographies de contrôle de la direction plus incisives, moins progressives, afin d'éviter de sortir de la voie à la moindre courbe ou au moindre changement de largeur de voie. De plus, la sensation pour le conducteur peut être désagréable notamment si le véhicule est proche d'un mur ou d'un trottoir.

Il existe donc un besoin d'une fonction capable d'appliquer un décalage automatique au véhicule dès qu'un autre véhicule est détecté en interligne, sans que la prestation soit désagréable pour le conducteur.

### RESUME DE L'INVENTION

L'invention offre une solution aux problèmes évoqués précédemment, en permettant de décaler automatiquement le véhicule dans la voie dès que nécessaire et sans dégrader l'expérience de conduite du conducteur.

Un premier aspect de l'invention concerne un procédé de décalage automatique d'un véhicule vers un côté d'une voie sur laquelle circule ledit véhicule, comportant une étape de décalage automatique dudit véhicule vers ledit côté de la voie, mise en œuvre par une fonction de contrôle du positionnement du véhicule dans la voie implémentée sur ledit véhicule, caractérisé en ce que l'étape de décalage est mise en œuvre si une condition prédéfinie est remplie, la condition prédéfinie étant remplie si un temps nécessaire audit véhicule pour réaliser le décalage est supérieur ou égal à un temps nécessaire audit véhicule pour atteindre une vitesse nulle, et si une distance nécessaire audit véhicule pour réaliser le décalage est inférieure à une distance entre ledit véhicule et un autre véhicule précédant ledit véhicule dans la voie.

Grâce à l'invention, le décalage automatique est réalisé dès lors que l'on estime que le décalage ne pourra plus être réalisé ultérieurement compte tenu de la vitesse du véhicule, mais seulement si le véhicule est suffisamment éloigné du véhicule qui le précède. Ainsi, le décalage est réalisé préventivement pour que le véhicule à l'arrêt soit décalé dans le cas où un autre véhicule arriverait en interligne.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Selon une variante de réalisation, le procédé selon l'invention comporte une étape de calcul du temps nécessaire audit véhicule pour réaliser le décalage, prenant en compte un temps de réaction dudit véhicule, une amplitude maximale de décalage dans la voie, une vitesse latérale moyenne dudit véhicule et un temps de stabilisation dudit véhicule dans la voie après décalage.

Selon une sous-variante de réalisation de la variante de réalisation précédente, le procédé selon l'invention comporte une étape de calcul de l'amplitude maximale de décalage dans la voie, prenant en compte la largeur de la voie, la largeur dudit véhicule et une marge de sécurité par rapport au côté de la voie.

Selon une variante de réalisation compatible avec la variante de réalisation précédente, le procédé selon l'invention comporte une étape de calcul du temps nécessaire audit véhicule pour atteindre une vitesse nulle, prenant en compte une vitesse courante dudit véhicule et une décélération maximale dudit véhicule.

Selon une variante de réalisation compatible avec les variantes de réalisation précédentes, le procédé selon l'invention comporte une étape de calcul de la distance nécessaire audit véhicule pour réaliser le décalage, prenant en compte une vitesse courante dudit véhicule et le temps nécessaire audit véhicule pour réaliser le décalage.

Selon une variante de réalisation compatible avec les variantes de réalisation précédentes, le procédé selon l'invention comporte une étape de recentrage automatique dudit véhicule dans la voie, mise en œuvre après l'étape de décalage, l'étape de recentrage étant réalisée si la condition prédéfinie n'est plus remplie et/ou si ledit véhicule se trouve dans une situation prédéfinie.

Ainsi, le véhicule est recentré dans la voie dès lors que l'on estime que les conditions sont remplies pour qu'un nouveau décalage puisse être réalisé si un autre véhicule est détecté en interligne et/ou uniquement si le véhicule est dans une situation donnée, par exemple avec peu d'autres véhicules à proximité et avec une vitesse supérieure à un seuil.

Selon une sous-variante de réalisation de la variante de réalisation précédente, l'étape de recentrage est réalisée après au moins une durée prédéfinie consécutive à la mise en œuvre de l'étape de décalage.

Ainsi, il est possible d'éviter une succession de phases de décalage/recentrage dans la voie, qui nuirait à l'expérience de conduite des passagers du véhicule.

Selon une variante de réalisation compatible avec les variantes de réalisation précédentes, l'étape de décalage est réalisée si un autre véhicule est détecté en interligne à l'arrière dudit véhicule.

Un deuxième aspect de l'invention concerne un véhicule comportant des moyens pour mettre en œuvre le procédé selon l'invention.

Un troisième aspect de l'invention concerne un produit programme d'ordinateur comprenant des instructions qui, lorsque le programme est exécuté par un ordinateur, conduisent celui-ci à mettre en œuvre les étapes du procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon l'invention.
- La figure 2 montre une représentation schématique d'un véhicule sur lequel est appliqué le procédé selon l'invention.

### DESCRIPTION DETAILLEE

Sauf précision contraire, un même élément apparaissant sur des figures différentes présente une référence unique.

L'invention concerne un procédé permettant le décalage d'un véhicule donné dans une voie de circulation sur laquelle circule le véhicule et ceci de manière automatique, c'est-à-dire sans intervention d'un conducteur du véhicule.

Avant la mise en œuvre du décalage, le véhicule est relativement centré dans sa voie de circulation, et une fois le décalage mis en œuvre, le véhicule est décalé vers un côté de la voie de circulation.

Le véhicule est par exemple un véhicule automobile, tel qu'une voiture ou un camion.

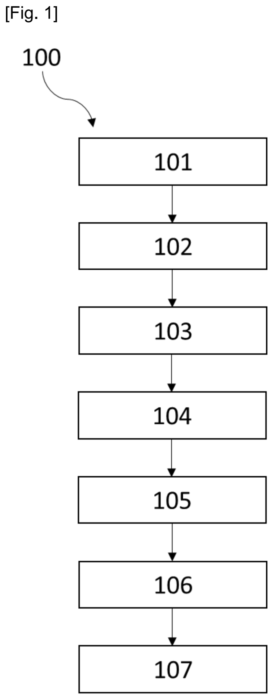

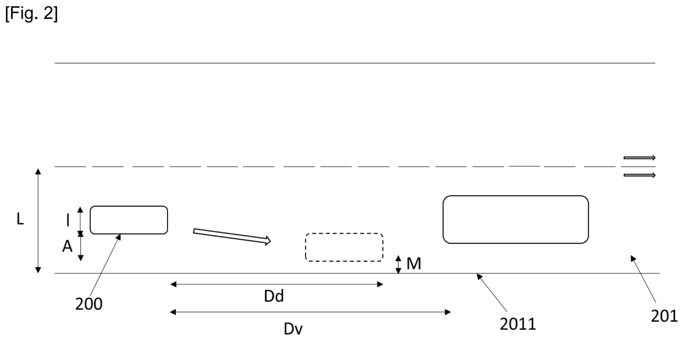

L'enchaînement des étapes du procédé 100 est illustré sur la figure 1 et une représentation schématique de la mise en œuvre du procédé 100 est illustrée sur la figure 2.

Une première étape 101 du procédé 100 consiste à calculer une amplitude A maximale de décalage du véhicule 200 dans sa voie 201 de circulation.

L'amplitude A maximale de décalage dépend par exemple de la largeur L de la voie 201 de circulation, de la largeur l du véhicule 200 et d'une marge M de sécurité par rapport au côté 2011 de la voie 201 vers lequel se décale le véhicule 200.

L'amplitude A maximale de décalage vaut par exemple :
$A = \frac{L - l - 2 ∗ M}{2}$

Ainsi, si l'on prend l'exemple d'un véhicule 200 présentant une largeur d'1,90 m circulant dans une voie 201 présentant une largeur de 3.5 m en considérant une marge M de sécurité de 0.1 m, l'amplitude A maximale de décalage vaut 0.7 m.

Une deuxième étape 102 du procédé 100 consiste à calculer un temps td nécessaire au véhicule 200 pour réaliser le décalage dans sa voie 201 de circulation.

Le temps td nécessaire au véhicule 200 pour réaliser le décalage dans sa voie 201 de circulation dépend par exemple d'un temps tr de réaction du véhicule 200, et en particulier d'un calculateur du véhicule 200 pour enclencher la mise en œuvre du décalage, de l'amplitude A maximale de décalage dans la voie 201 calculée lors de la première étape 101, d'une vitesse vlat latérale moyenne du véhicule 200 et d'un temps ts de stabilisation du véhicule 200 dans la voie 201 après décalage.

Le temps td nécessaire au véhicule 200 pour réaliser le décalage dans sa voie 201 de circulation vaut par exemple :
$td = tr + ts + \frac{A}{vlat}$

Ainsi, si l'on reprend l'exemple précédent en considérant que le cumul du temps tr de réaction et du temps ts de stabilisation est égal à 1 s et une vitesse vlat latérale moyenne de 0.5m/s, le temps td nécessaire au véhicule 200 pour réaliser le décalage dans sa voie 201 de circulation vaut 2.4 s.

Une troisième étape 103 du procédé 100 consiste à calculer un temps tv nécessaire au véhicule 200 pour atteindre une vitesse nulle.

Le temps tv nécessaire au véhicule 200 pour atteindre une vitesse nulle dépend par exemple d'une vitesse v courante du véhicule 200 et d'une décélération D maximale du véhicule 200.

La décélération D maximale du véhicule 200 est par exemple la décélération maximale permise pour une fonction implémentée sur le véhicule 200, c'est-à-dire sans intervention du conducteur.

Le temps tv nécessaire au véhicule 200 pour atteindre une vitesse nulle vaut par exemple :
$tv = \frac{v}{D}$

Ainsi, si l'on reprend l'exemple précédent en considérant que le véhicule 200 roule à 50 km/h, c'est-à-dire 14 m/s, et que la décélération D maximale permise est de 4 m/s², le temps tv nécessaire au véhicule 200 pour atteindre une vitesse nulle vaut 3.5 s.

Alternativement, la troisième étape 103 pourrait être réalisée avant la première étape 101 et la deuxième étape 102.

Une quatrième étape 104 du procédé 100 consiste à calculer une distance Dd nécessaire au véhicule 200 pour réaliser le décalage.

La distance Dd nécessaire au véhicule 200 pour réaliser le décalage dépend par exemple de la vitesse v courante du véhicule 200 et du temps nécessaire td au véhicule 200 pour réaliser le décalage.

La distance Dd nécessaire au véhicule 200 pour réaliser le décalage vaut par exemple :
$Dd = v ∗ td$

Ainsi, si l'on reprend l'exemple précédent, la distance Dd nécessaire au véhicule 200 pour réaliser le décalage vaut 33.6 m.

Sur la figure 2 est représentée en pointillés la position qu'aurait le véhicule 200 dans la voie 201 si le décalage était immédiatement réalisé.

Selon une variante de réalisation, la quatrième étape 104 ne pourrait être réalisée que si le temps td nécessaire au véhicule 200 pour réaliser le décalage calculé à la deuxième étape 102 est supérieur ou égal au temps tv nécessaire au véhicule 200 pour atteindre une vitesse nulle calculé à la troisième étape 103.

Une cinquième étape 105 du procédé 100 n'est réalisée que si une condition prédéfinie est remplie.

La condition prédéfinie est remplie si le temps td nécessaire au véhicule 200 pour réaliser le décalage calculé à la deuxième étape 102 est supérieur ou égal au temps tv nécessaire au véhicule 200 pour atteindre une vitesse nulle calculé à la troisième étape 103, et si la distance Dd nécessaire au véhicule 200 pour réaliser le décalage est inférieure à une distance Dv entre le véhicule 200 et un autre véhicule le précédant dans la voie 201 de circulation.

Ainsi, si l'on reprend l'exemple précédent, la condition prédéfinie n'est pas remplie puisque le temps td nécessaire au véhicule 200 pour réaliser le décalage vaut 2.4 s et est inférieur au temps tv nécessaire au véhicule 200 pour atteindre une vitesse nulle qui vaut 3.5 s.

En revanche, la condition prédéfinie serait remplie si le véhicule 200 roulait à 35 km/h, c'est-à-dire à 10 m/s, et qu'un autre véhicule précédait le véhicule 200 de moins de 25 m.

La cinquième étape 105 du procédé 100 consiste pour une fonction de contrôle du positionnement du véhicule dans la voie implémentée sur le véhicule 200, à mettre en oeuvre un décalage automatique du véhicule 200 vers le côté 2011 de sa voie 201 de circulation, le décalage présentant par exemple l'amplitude A maximale de décalage dans la voie 201 calculée lors de la première étape 101.

La fonction de contrôle du positionnement du véhicule dans la voie est par exemple la fonction permettant au véhicule d'automatiquement se serrer d'un côté de sa voie pour dégager un espace en interligne dans certaines situations prédéfinies, par exemple pour que des motos ou des véhicules d'urgence puissent passer.

Selon un exemple de réalisation, la fonction de contrôle du positionnement du véhicule dans la voie ne peut être activée que dans le cas où une fonction de centrage de voie implémentée sur le véhicule et permettant de centrer automatiquement le véhicule dans sa voie est activée.

Selon une variante de réalisation, la cinquième étape 105 peut également être réalisée si la condition prédéfinie n'est pas remplie mais qu'un autre véhicule est détecté en interligne à l'arrière du véhicule 200.

Une sixième étape 106 du procédé 100 n'est réalisée que si, suite à la mise en œuvre de la cinquième étape 105, la condition prédéfinie n'est plus remplie, c'est-à-dire que le temps td nécessaire au véhicule 200 pour réaliser le décalage calculé à la deuxième étape 102 est inférieur au temps tv nécessaire au véhicule 200 pour atteindre une vitesse nulle calculé à la troisième étape 103, ou si la distance Dd nécessaire au véhicule 200 pour réaliser le décalage est supérieure à une distance Dv entre le véhicule 200 et un autre véhicule le précédant dans la voie 201 de circulation, ou si le véhicule 200 se trouve dans une situation prédéfinie.

Le véhicule 200 se trouve par exemple dans la situation prédéfinie s'il se trouve dans un embouteillage, c'est-à-dire qu'il y a plus de trois autres véhicules autour du véhicule 200 et que le véhicule 200 roule à une vitesse inférieure à 30 km/h.

La sixième étape 106 du procédé 100 consiste à recentrer automatiquement le véhicule 200 dans sa voie de circulation 201.

La sixième étape 106 est par exemple mise en œuvre par la fonction de centrage de voie.

Selon une variante de réalisation, la sixième étape 106 n'est mise en œuvre que si au moins une durée prédéfinie s'est écoulée depuis la mise en œuvre de la cinquième étape 105.

La durée prédéfinie est par exemple de 5 s.

## Revendications

1. Procédé (100) de décalage automatique d'un véhicule (200) vers un côté (2011) d'une voie (201) sur laquelle circule ledit véhicule (200), comportant une étape (105) de décalage automatique dudit véhicule (200) vers ledit côté (2011) de la voie (201), mise en œuvre par une fonction de contrôle du positionnement du véhicule (200) dans la voie implémentée sur ledit véhicule (200), **caractérisé en ce que** l'étape (105) de décalage est mise en œuvre si une condition prédéfinie est remplie, la condition prédéfinie étant remplie si un temps nécessaire audit véhicule (200) pour réaliser le décalage est supérieur ou égal à un temps nécessaire audit véhicule (200) pour atteindre une vitesse nulle, et si une distance (Dd) nécessaire audit véhicule (200) pour réaliser le décalage est inférieure à une distance (Dv) entre ledit véhicule (200) et un autre véhicule précédant ledit véhicule (200) dans la voie (201).

2. Procédé (100) selon la revendication précédente, comportant une étape (102) de calcul du temps nécessaire audit véhicule (200) pour réaliser le décalage, prenant en compte un temps de réaction dudit véhicule (200), une amplitude (A) maximale de décalage dans la voie (201), une vitesse latérale moyenne dudit véhicule (200) et un temps de stabilisation dudit véhicule (200) dans la voie (201) après décalage.

3. Procédé (100) selon la revendication précédente, comportant une étape (101) de calcul de l'amplitude (A) maximale de décalage dans la voie (201), prenant en compte la largeur (L) de la voie (201), la largeur (l) dudit véhicule (200) et une marge (M) de sécurité par rapport au côté (2011) de la voie (201).

4. Procédé (100) selon l'une quelconque des revendications précédentes, comportant une étape (103) de calcul du temps nécessaire audit véhicule (200) pour atteindre une vitesse nulle, prenant en compte une vitesse courante dudit véhicule (200) et une décélération maximale dudit véhicule (200).

5. Procédé (100) selon l'une quelconque des revendications précédentes, comportant une étape (104) de calcul de la distance (Dd) nécessaire audit véhicule (200) pour réaliser le décalage, prenant en compte une vitesse courante dudit véhicule (200) et le temps nécessaire audit véhicule (200) pour réaliser le décalage.

6. Procédé (100) selon l'une quelconque des revendications précédentes, comportant une étape (106) de recentrage automatique dudit véhicule (200) dans la voie (201), mise en œuvre après l'étape (105) de décalage, l'étape (106) de recentrage étant réalisée si la condition prédéfinie n'est plus remplie et/ou si ledit véhicule (200) se trouve dans une situation prédéfinie.

7. Procédé (100) selon la revendication précédente, dans lequel l'étape (106) de recentrage est réalisée après au moins une durée prédéfinie consécutive à la mise en œuvre de l'étape (105) de décalage.

8. Procédé (100) selon l'une quelconque des revendications précédentes, dans lequel l'étape (105) de décalage est réalisée si un autre véhicule est détecté en interligne à l'arrière dudit véhicule (200).

9. Véhicule (200) comportant des moyens pour mettre en œuvre le procédé (100) selon l'une quelconque des revendications précédentes.

10. Produit programme d'ordinateur comprenant des instructions qui, lorsque le programme est exécuté par un ordinateur, conduisent celui-ci à mettre en œuvre les étapes du procédé (100) selon l'une quelconque des revendications 1 à 8.
